# EUROPÄISCHE PATENTANMELDUNG

(11) **EP 4 399 957 A1**
(43) Veröffentlichungstag der Anmeldung: **17.07.2024**
(21) Anmeldenummer: 23212621.9
(22) Anmeldetag: 28.11.2023
(51) Int. Cl.: A01D 41/14, A01D 41/127

(54) **LANDWIRTSCHAFTLICHE ERNTEMASCHINE MIT EINEM VORSATZGERÄT**

(30) Priorität: 12.01.2023 DE 102023100618
(71) Anmelder: CLAAS Selbstfahrende Erntemaschinen GmbH, 33428 Harsewinkel (DE)
(72) Erfinder: Thiesmann, Waldemar, 49080 Osnabrück (DE); Wielenberg, Andreas, 32049 Herford (DE); Füchtling, Christian, 48317 Drenstein Rinkerode (DE); Bormann, Bastian, 33334 Gütersloh (DE)
(74) Vertreter: CLAAS Gruppe

(57) **Zusammenfassung**

Die vorliegende Erfindung betrifft eine selbstfahrende landwirtschaftliche Erntemaschine (1) zum Aufnehmen, Bearbeiten und Weiterleiten von Erntegut (2) eines landwirtschaftlichen Feldes (3) mit einem Vorsatzgerät (4) zum Schneiden und Aufnehmen des Ernteguts (2).

Die vorliegende Erfindung beruht auf dem allgemeinen Gedanken, dass das Vorsatzgerät (4) der selbstfahrenden landwirtschaftlichen Erntemaschine (1) in Abhängigkeit von Positionsdaten und bereits aufgezeichneten Vorfeldoberflächeneigenschaften gesteuert und/oder geregelt wird.

## Beschreibung

Die vorliegende Erfindung betrifft eine selbstfahrende landwirtschaftliche Erntemaschine zum Aufnehmen, Bearbeiten und Weiterleiten von Erntegut eines landwirtschaftlichen Feldes, wobei die Erntemaschine ein Vorsatzgerät zum Schneiden und Aufnehmen des Ernteguts aufweist, welches einen Sensor zur Erfassung des Abstandes des Vorsatzgeräts zum Boden des zu bearbeitenden landwirtschaftlichen Feldes aufweist.

In der WO 2022/003457 A1 wird ein Verfahren zum Betreiben einer Erntemaschine beschrieben, wobei ein Sensor eine Änderung der Position eines Ährenhebers relativ zum Schneidwerksrahmen erfasst, sodass der Mähdrescher die Position des Erntevorsatzrahmens derart anpassen kann, dass das Schneidwerkzeug in einem ausgewählten Abstand von der Bodenoberfläche gehalten wird. Nachteilig hieran ist, dass der Sensor eine mechanische Komponente des Vorsatzgerätes ausbildet und daher eine vorausschauende Planung der Ansteuerung des Schneidwerkzeuges bezüglich des ganzen landwirtschaftlichen Feldes nicht ermöglicht.

Die DE 102 14 648 A1 betrifft Verfahren und Messeinrichtungen zur Ermittlung des Abstandes zwischen einer landwirtschaftlichen Maschine und einem Boden, wobei mittels einem Sensor berührungslos den Abstand zwischen dem Vorsatzgerät und der Oberfläche des Feldes ermittelt wird. Auch hier kann eine vorausschauende Planung der Ansteuerung des Schneidwerkzeuges bezüglich des ganzen landwirtschaftlichen Feldes nicht erfolgen, da der berührungslose Sensor lediglich einen Bereich der Oberfläche des Feldes erfassen kann, der unter dem berührungslosen Sensor vorliegt.

Der vorliegenden Erfindung liegt die Aufgabe zugrunde, eine verbesserte Ausführungsform anzugeben, die eine vorausschauende Planung der Ansteuerung des Vorsatzgerätes bezüglich des landwirtschaftlichen Feldes ermöglicht, oder zumindest eine alternative Ausführungsform einer selbstfahrenden landwirtschaftlichen Erntemaschine anzugeben, wobei insbesondere eine Verringerung der Herstellungskosten und/oder eine Betriebsoptimierung der Erntemaschine, insbesondere des Vorsatzgerätes, bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass das Vorsatzgerät der selbstfahrende landwirtschaftliche Erntemaschine in Abhängigkeit von Positionsdaten und bereits aufgezeichneten Vorfeldoberflächeneigenschaften gesteuert und/oder geregelt wird.

Die erfindungsgemäße selbstfahrende landwirtschaftliche Erntemaschine, die insbesondere als selbstfahrender Mähdrescher oder selbstfahrender Feldhäcksler ausgebildet sein kann, ist zum Aufnehmen, Bearbeiten und Weiterleiten von Erntegut eines landwirtschaftlichen Feldes ausgebildet, wobei mit einem Vorsatzgerät das Erntegut vom landwirtschaftlichen Feldes geschnitten und aufgenommen wird. Das Vorsatzgerät weist wenigstens einen Sensor zur Erfassung des Abstandes des Vorsatzgeräts zum Boden des zu bearbeitenden landwirtschaftlichen Feldes auf. Der Sensor zur Erfassung des Abstandes des Vorsatzgeräts zum Boden erfasst einen aktuellen Abstand des Vorsatzgeräts zur Erdoberfläche, der keine vorausschauende Ermittlung des Abstandes des Vorsatzgeräts zum Boden für das ganze landwirtschaftliche Feld ermöglicht, sondern zur Sicherheit der selbstfahrenden landwirtschaftlichen Erntemaschine eingesetzt wird, um eine Beschädigung des Vorsatzgeräts durch einen unerwünschten Kontakt mit dem Boden zu vermeiden.

Der Sensor kann als Tastsensor und/oder als berührungsloser Abstandssensor, insbesondere als Radar basierter berührungsloser Abstandssensor, ausgebildet sein.

Die selbstfahrende landwirtschaftliche Erntemaschine weist mehrere Aktoren, insbesondere elektrische und/oder hydraulische Aktoren, zur Positionierung des Vorsatzgerät bezüglich des Bodens des zu bearbeitenden landwirtschaftlichen Feldes auf. Zusätzlich weist die selbstfahrende landwirtschaftliche Erntemaschine eine Einstellvorrichtung auf, die dazu vorgesehen und eingerichtet, insbesondere ausgebildet und/oder programmiert, ist, die Aktoren in Abhängigkeit des mittels des Sensors erfassten Abstandes bezüglich des Bodens derart einzustellen, dass das Vorsatzgerät eine Höhenpositionierung bezüglich des Bodens des zu bearbeitenden landwirtschaftlichen Feldes einnimmt. Unter einer Höhenpositionierung des Vorsatzgerätes bezüglich des Bodens des zu bearbeitenden landwirtschaftlichen Feldes kann zu verstehen sein, dass ein Bauteil des Vorsatzgerätes, insbesondere ein Messerbalken des Vorsatzgerätes, eine vordefinierte Höhenposition bezüglich des Bodens des zu bearbeitenden landwirtschaftlichen Feldes einnimmt. Die Einstellvorrichtung kann als Steuer- und/oder Regelvorrichtung ausgebildet sein, die eine Einstellung durch eine Steuerung und/oder Regelung bewirkt. Die Einstellvorrichtung kann eine Rechenvorrichtung und einen Datenspeicher aufweisen. Ferner kann die Einstellvorrichtung ein Display zur Steuerung und/oder Regelung der selbstfahrenden landwirtschaftlichen Erntemaschine für einen Fahrer der selbstfahrenden landwirtschaftlichen Erntemaschine aufweisen.

Erfindungsgemäß ist ein digitales Abbild des, insbesondere des gesamten, zu bearbeitenden landwirtschaftlichen Feldes im Datenspeicher der Steuer- und/oder Regeleinrichtung hinterlegt, wobei dieses digitale Abbild des, insbesondere des gesamten, zu bearbeitenden landwirtschaftlichen Feldes Informationen bezüglich des Bodens des zu bearbeitenden landwirtschaftlichen Feldes aufweist. Mit anderen Worten ausgedrückt, bezieht sich das digitale Abbild des zu bearbeitenden landwirtschaftlichen Feldes nicht auf eine Oberflächenstruktur des Feldbestandes, welches das Erntegut umfasst, sondern auf die Oberfläche des Bodens des zu bearbeitenden landwirtschaftlichen Feldes.

Die Einstellvorrichtung ist dazu vorgesehen und eingerichtet, bei der Einstellung der Aktoren für die Höhenpositionierung des Vorsatzgerätes die Informationen bezüglich des Bodens des zu bearbeitenden landwirtschaftlichen Feldes einzubeziehen. Dieses Einstellen des Vorsatzgerätes kann vorsehen, dass eine Empfindlichkeit der Vorsatzgeräte-Positionsanpassung, wie z.B. die Empfindlichkeit und/oder Gewichtung von Tastsensor-Signalen, in Abhängigkeit von Positionsdaten, wie z.B. GPS-Daten, und bereits aufgezeichneten Vorfeldoberflächeneigenschaften des Bodens, wie z.B. bereits aufgezeichneten Topologie-Daten und/oder bereits aufgezeichneten Bewegungen von Komponenten der Arbeitsmaschine, eingestellt wird. Unter bereits aufgezeichnet kann zu verstehen sein, dass die Aufzeichnung zeitlich, bevor die selbstfahrende landwirtschaftliche Erntemaschine mit der Bearbeitung des landwirtschaftlichen Feldes begonnen hat, erfolgt ist.

Dies ermöglicht eine vorausschauende Planung der Ansteuerung und/oder Reglung des Vorsatzgerätes bezüglich des, insbesondere des gesamten, landwirtschaftlichen Feldes. Ferner kann vorgesehen sein, dass basierend auf diesem digitalen Abbild des, insbesondere des gesamten, zu bearbeitenden landwirtschaftlichen Feldes und der Art des Vorsatzgerätes eine Route, insbesondere eine optimierte Route, erstellt und mittels der selbstfahrende landwirtschaftliche Erntemaschine abgefahren wird.

Hierbei kann es vorgesehen sein, dass bei einer "ruppigen" Topologien, also bei keiner ebenflächigen Erdoberfläche des zu bearbeitenden landwirtschaftlichen Feldes, die Einstellvorrichtung dazu vorgesehen und eingerichtet ist, das Vorsatzgerät in Abhängigkeit der Informationen bezüglich der Erdoberfläche des zu bearbeitenden landwirtschaftlichen Feldes ausgehoben und eine höhere Stoppelhöhe einzustellen, um Kollisionen mit dem Untergrund zu reduzieren und/oder zu vermeiden.

Dies hat ferner den Vorteil, dass ein Fahrer entlastet wird, indem die Vorfeldoberflächenstruktur ihm und/oder der Erntemaschine zur Verfügung gestellt wird, sodass er oder/oder die Erntemaschine frühzeitig darauf regieren kann und insbesondere eine Betriebsoptimierung der Erntemaschine, insbesondere des Vorsatzgerätes, ermöglicht wird. Ferner wird hierdurch eine Verringerung der Herstellungskosten als auch eine Vereinfachung der Herstellung der selbstfahrenden landwirtschaftlichen Erntemaschine, insbesondere des Vorsatzgerätes, ermöglicht, da auf ein bereits aufgezeichnetes digitale Abbild des zu bearbeitenden landwirtschaftlichen Feldes genutzt wird und die selbstfahrende landwirtschaftliche Erntemaschine daher keine eigenen Sensoren zur vorausschauenden Erfassung des Bodens des zu bearbeitenden landwirtschaftlichen Feldes aufweisen muss.

Bei einer vorteilhaften Weiterbildung der erfindungsgemäßen Lösung ist vorgesehen, dass die Einstellvorrichtung dazu vorgesehen und eingerichtet ist, die Aktoren in Abhängigkeit des mittels des Sensors erfassten Abstandes bezüglich des Bodens derart einzustellen, dass das Vorsatzgerät zusätzlich zur Höhenpositionierung eine Querpositionierung bezüglich des Bodens des zu bearbeitenden landwirtschaftlichen Feldes einnimmt, wobei die Einstellvorrichtung dazu vorgesehen und eingerichtet ist, bei der Einstellung der Aktoren für die Höhenpositionierung und die Querpositionierung des Vorsatzgerätes die Informationen bezüglich des Bodens des zu bearbeitenden landwirtschaftlichen Feldes einzubeziehen.

Die selbstfahrende landwirtschaftliche Erntemaschine fährt entlang einer Fahrtrichtung, wobei eine Querachse senkrecht und/oder orthogonal zur Fahrtrichtung ausgerichtet ist. Außerdem ist auch eine Höhenachse senkrecht und/oder orthogonal zur Fahrtrichtung ausgerichtet. Ferner ist die Querachse senkrecht und/oder orthogonal zur Höhenachse ausgerichtet, wobei die Höhenachse parallel zur Erdanziehungskraft ausgerichtet ist. Die Höhenpositionierung des Vorsatzgeräts kann eine Positionierung des ganzen Vorsatzgerätes, insbesondere eines Teils des Vorsatzgerätes, bezüglich der Höhenachse vorsehen. Die Querpositionierung des Vorsatzgeräts kann eine Positionierung des ganzen Vorsatzgerätes, insbesondere eines Teils des Vorsatzgerätes, bezüglich der Querachse vorsehen. Bei einer gleichzeitigen Höhenpositionierung und Querpositionierung des Vorsatzgeräts, insbesondere eines Teils des Vorsatzgerätes, kann eine Schräglage Vorsatzgeräts, insbesondere eines Teils des Vorsatzgerätes, bezüglich des Bodens des zu bearbeitenden landwirtschaftlichen Feldes eingestellt werden.

Bei einer vorteilhaften Weiterbildung der erfindungsgemäßen Lösung ist vorgesehen, dass die selbstfahrende landwirtschaftliche Erntemaschine mit einem Geolokalisationssystem datentechnisch verbunden ist, welches dazu vorgesehen und eingerichtet ist, die Position der selbstfahrenden landwirtschaftlichen Erntemaschine bezüglich des landwirtschaftlichen Feldes zu ermitteln und der Einstellvorrichtung zu übermitteln, wobei die Einstellvorrichtung dazu vorgesehen und eingerichtet ist, das Vorsatzgerät basierend auf den Informationen bezüglich des Bodens des zu bearbeitenden landwirtschaftlichen Feldes und basierend auf der Position der die selbstfahrende landwirtschaftliche Erntemaschine bezüglich des landwirtschaftlichen Feldes vorausschauend einzustellen. Alternativ oder zusätzlich kann die Einstellvorrichtung dazu vorgesehen und eingerichtet sein, das Vorsatzgerät unabhängig von dem mittels des Sensors erfassten Abstandes bezüglich des Bodens einzustellen. Hierbei kann vorgesehen sein, dass auf eine Erfassung, insbesondere eine Erfassung mittels des Sensors der selbstfahrenden landwirtschaftlichen Erntemaschine, des Abstandes bezüglich des Bodens verzichtet wird und/oder die Einstellung des Vorsatzgerätes lediglich auf dem digitalen Abbild des landwirtschaftlichen Feldes, insbesondere einer digitalen Höhenkarte des Bodens des landwirtschaftlichen Feldes, erfolgt.

Geolokalisationssysteme sind insbesondere Satellitengestützte Systeme wie GPS, GALI-LEO oder GLONASS. Unter datentechnisch verbunden kann zu verstehen sein, dass ein kabelloser Datenaustausch erfolgt. Die selbstfahrende landwirtschaftliche Erntemaschine kann ein Satellitennavigationssystem aufweisen, das in an sich bekannter Weise Signale von Satelliten, insbesondere Navigationssatelliten, wie z.B. des GPS- oder Galileo-Systems, empfängt, um die geographische Position der selbstfahrenden landwirtschaftlichen Erntemaschine zu bestimmen und/oder diese zur Unterstützung von autonomem Navigieren der selbstfahrenden landwirtschaftlichen Erntemaschine auf dem zu bearbeitenden landwirtschaftlichen Feldes einzusetzen.

Unter vorausschauend kann zu verstehen sein, dass das Einstellen des Vorsatzgerät bezüglich des Bodens des zu bearbeitenden landwirtschaftlichen Feldes derart erfolgt, dass das Einstellen des Vorsatzgerätes zeitabhängig und/oder ortsabhängig und/oder positionsabhängig optimal erfolgt. Hierbei kann insbesondere eine Kollision zwischen dem Vorsatzgerät und dem Boden des zu bearbeitenden landwirtschaftlichen Feldes vermieden werden, wobei gleichzeitig ein optimaler Schnitt des Erntegutes erfolgen kann.

Bei einer vorteilhaften Weiterbildung der erfindungsgemäßen Lösung ist vorgesehen, dass das digitale Abbild des landwirtschaftlichen Feldes eine digitale topographische Karte des zu bearbeitenden landwirtschaftlichen Feldes ist, und/oder dass das digitale Abbild des landwirtschaftlichen Feldes eine digitale topographische Karte des zu bearbeitenden landwirtschaftlichen Feldes ist, wobei die Karte Höheninformationen bezüglich der Erdoberfläche des zu bearbeitenden landwirtschaftlichen Feldes aufweist.

Bei einer vorteilhaften Weiterbildung der erfindungsgemäßen Lösung ist vorgesehen, dass die Einstellvorrichtung dazu vorgesehen und eingerichtet ist, ebene Bereiche des Bodens und/oder unebene Bereiche des Bodens und/oder Übergangsbereiche des Bodens des zu bearbeitenden landwirtschaftlichen Feldes aus den im Datenspeicher hinterlegten Informationen zu ermitteln.

Bei einer vorteilhaften Weiterbildung der erfindungsgemäßen Lösung ist vorgesehen, dass die Einstellvorrichtung dazu vorgesehen und eingerichtet ist, die Höhenpositionierung und/oder die Querpositionierung des Vorsatzgerätes bezüglich des Bodens zwischen einem ebenen Bereich des Bodens und einem unebenen Bereich des Bodens vorausschauend einzustellen, und/oder dass die Einstellvorrichtung dazu vorgesehen und eingerichtet ist, die Höhenpositionierung und/oder die Querpositionierung des Vorsatzgerätes bezüglich des Bodens zwischen mehreren zueinander höhenversetzen ebenen Bereichen des Bodens vorausschauend einzustellen.

Bei einer vorteilhaften Weiterbildung der erfindungsgemäßen Lösung ist vorgesehen, dass die Einstellvorrichtung dazu vorgesehen und eingerichtet ist, eine automatische Höhenpositionierung des Vorsatzgerätes vorausschauend bezüglich eines Übergangs von einem ebenen Bereich des Bodens zu einem unebenen Bereich des Bodens derart einzustellen, dass das Vorsatzgerät über dem unebenen Bereich einen größeren Abstand zum unebenen Bereich des Bodens einnimmt als der Abstand des Vorsatzgerätes zum ebenen Bereich des Bodens war, und/oder dass die Einstellvorrichtung dazu vorgesehen und eingerichtet ist, eine automatische Höhenpositionierung des Vorsatzgerätes vorausschauend bezüglich eines Übergangs von einem unebenen Bereich des Bodens zu einem ebenen Bereich des Bodens derart einzustellen, dass das Vorsatzgerät über dem ebenen Bereich einen kleineren Abstand zum ebenen Bereich des Bodens einnimmt als der Abstand des Vorsatzgerätes zum unebenen Bereich des Bodens war.

Bei einer vorteilhaften Weiterbildung der erfindungsgemäßen Lösung ist vorgesehen, dass die Einstellvorrichtung dazu vorgesehen und eingerichtet ist, eine automatische Höhenpositionierung und/oder Querpositionierung basierend auf dem mittels des Sensors erfassten Abstandes des Vorsatzgeräts zum Boden wenigstens teilweise zu verhindern, wenn die Informationen bezüglich des Bodens des zu bearbeitenden landwirtschaftlichen Feldes darlegen, dass der Bereich des Bodens, über dem das Vorsatzgerät positioniert ist, einen ebenen Bereich des Bodens ausbildet.

Hierdurch wird verhindert, dass die automatische Höhenpositionierung und/oder Querpositionierung eine Übersteuerung bewirkt, obwohl gemäß den Informationen bezüglich des Bodens des zu bearbeitenden landwirtschaftlichen Feldes vorhergesagt wird, dass es ein ebenflächiger Boden ist. Eine solche Übersteuerung könnte beispielsweise dadurch hervorgerufen werden, dass der Sensor beispielsweise aufgrund von Maulwurfshügeln, starke Stoppeln und/oder Steine eine Höhenpositionierung und/oder Querpositionierung des Vorsatzgeräts initiieren würde, die jedoch nachteilig wäre für die Ernte mittels der selbstfahrenden landwirtschaftliche Erntemaschinen wäre und keine Gefahr für die selbstfahrende landwirtschaftliche Erntemaschine darstellt. Dies wird erfindungsgemäß dadurch verhindert, dass die Einstellvorrichtung dazu vorgesehen und eingerichtet ist, die automatische Höhenpositionierung und/oder Querpositionierung des Vorsatzgeräts zu verhindern, wenn die Informationen bezüglich des Bodens des zu bearbeitenden landwirtschaftlichen Feldes darlegen, dass die Erdoberfläche des zu bearbeitenden landwirtschaftlichen Feldes einen ebenen Boden ausbildet, außer wenn der Sensor einen Grenzwert überschreitet. Hierdurch wird neben der Sicherheit der selbstfahrenden landwirtschaftlichen Erntemaschinen auch ein stabiles Schnittbild bezüglich des landwirtschaftlichen Feldes ermöglicht.

Bei einer vorteilhaften Weiterbildung der erfindungsgemäßen Lösung ist vorgesehen, dass die Einstellvorrichtung dazu vorgesehen und eingerichtet ist, eine Empfindlichkeit der Höhenpositionierung und/oder der Querpositionierung des Vorsatzgeräts in Abhängigkeit der Informationen bezüglich des Bodens des zu bearbeitenden landwirtschaftlichen Feldes einzustellen, und/oder dass die Einstellvorrichtung dazu vorgesehen und eingerichtet ist, eine Gewichtung, insbesondere der Empfindlichkeit, zwischen der Höhenpositionierung und der Querpositionierung des Vorsatzgeräts in Abhängigkeit der Informationen bezüglich des Bodens des zu bearbeitenden landwirtschaftlichen Feldes einzustellen.

Bei einer vorteilhaften Weiterbildung der erfindungsgemäßen Lösung ist vorgesehen, dass das Vorsatzgerät mehrteilig durch Vorsatzgerätabschnitte ausgebildet ist, wobei diese Vorsatzgerätabschnitte dazu vorgesehen und eingerichtet sind, unter-schiedliche Einstellungen, insbesondere unterschiedliche Höhenpositionierungen und/oder Querpositionierungen, bezüglich der Erdoberfläche des zu bearbeitenden landwirtschaftlichen Feldes anzunehmen, wobei die Einstellvorrichtung dazu vorgesehen und eingerichtet ist, die Vorsatzgeräteabschnitte des Vorsatzgeräts unabhängig voneinander und/oder miteinander gewichtet basierend auf den Informationen bezüglich des Bodens des zu bearbeitenden landwirtschaftlichen Feldes einzustellen.

Bei einer vorteilhaften Weiterbildung der erfindungsgemäßen Lösung ist vorgesehen, dass das Vorsatzgerät bewegbare, insbesondere mittels Aktoren bewegbare, Messerbalken aufweist, die in einen Bewegungsbereich gegenüber dem Boden des zu bearbeitenden landwirtschaftlichen Feldes bewegbar sind, wobei die Einstellvorrichtung dazu vorgesehen und eingerichtet ist, den Bewegungsbereich der bewegbare Messerbalken, insbesondere ihrer Messerbalken, basierend auf den Informationen bezüglich des Bodens des zu bearbeitenden landwirtschaftlichen Feldes einzustellen. Alternativ oder zusätzlich kann die Einstellvorrichtung dazu vorgesehen und eingerichtet sein, falls das Vorsatzgerät nicht in der Lage ist, insbesondere aufgrund des maximalen Bewegungsbereiches des Vorsatzgerätes, über eine gesamte Vorsatzgerätquerbreite das Erntegut abzuschneiden, eine Warnung, insbesondere eine akustische und/oder optische Warnung, an einen Fahrer zu übermitteln und/oder eine Reduktion der Fahrgeschwindigkeit der selbstfahrenden landwirtschaftlichen Erntemaschine einzustellen und/oder eine alternative Fahrroute vorzugeben, um möglichst viel Erntegut zu ernten, und/oder einem Schutz des Vorsatzgerät vor einer Bodenkollision eine höhere Priorität als dem Schnittbild und/oder dem Ernteverlust zuzuordnen.

Hierbei kann die Einstellvorrichtung dazu vorgesehen und eingerichtet sein, dass zunächst eine Warnung an einen Fahrer zu übermittelt wird, wenn das Vorsatzgerät nicht in der Lage ist, das Erntegut über eine gesamte Vorsatzgerätquerbreite abzuschneiden. Daran anschließend kann die Einstellvorrichtung die Reduktion der Fahrgeschwindigkeit der selbstfahrenden landwirtschaftlichen Erntemaschine einzustellen und/oder die alternative Fahrroute initiieren. Vorzugsweise kann die Einstellvorrichtung dazu vorgesehen und eingerichtet sein, dass in allen Fällen dem Schutz des Vorsatzgerät vor einer Bodenkollision eine höhere Priorität als dem Schnittbild und/oder dem Ernteverlust zugeordnet wird, sodass zur Vermeidung einer Bodenkollision ein ungewolltes Schnittbild und/oder ein höherer Ernteverlust ignoriert bzw. nicht vermieden wird.

Bei einer vorteilhaften Weiterbildung der erfindungsgemäßen Lösung ist vorgesehen, dass die Informationen, insbesondere Höheninformationen, bezüglich des Bodens des zu bearbeitenden landwirtschaftlichen Feldes mittels einem Satelliten und/oder einer fliegenden Drohenvorrichtung erfasst wurden. Diese Informationen kann somit mittels einer Topologieerfassung durch Satellit und/oder mittels einer Topologieerfassung durch Drohnenüberflüge ermittelt werden und in eine digitale Karte übertragen werden.

Bei einer vorteilhaften Weiterbildung der erfindungsgemäßen Lösung ist vorgesehen, dass die Informationen, insbesondere Höheninformationen, bezüglich des Bodens des zu bearbeitenden landwirtschaftlichen Feldes historische Daten darstellen, die mittels dieser selbstfahrenden landwirtschaftlichen Erntemaschine und/oder mittels einer anderen landwirtschaftlichen Arbeitsmaschine auf dem zu bearbeitenden landwirtschaftlichen Feld sensorisch erfasst wurden. Hierbei können sich die historischen Daten können auf zeitlich vorherige Überfahrungen, insbesondere Vorjahresüberfahrungen, des Bodens des zu bearbeitenden landwirtschaftlichen Feldes beziehen. Die sensorische Erfassung kann mit einer Sensorik einer selbstfahrenden landwirtschaftlichen Arbeitsmaschine erfolgen. Diese Sensorik kann als elektromagnetische Sensorik ausgebildet sein. Diese elektromagnetische Sensorik kann vor, unter und/oder hinter einem Schneidwerk des Vorsatzgerätes ausgebildet sein. Ferner kann diese elektromagnetische Sensorik des Vorsatzgerätes beispielsweise eine Kameravorrichtung, eine Radarvorrichtung, eine Laservorrichtung, eine Ultraschallvorrichtung, und/oder eine kapazitive Sensorik ausbilden. Ferner können die Informationen eine Kartierung, z.B. Beregner, aufweisen.

Bei einer vorteilhaften Weiterbildung der erfindungsgemäßen Lösung ist vorgesehen, dass die Informationen, insbesondere Höheninformationen, bezüglich des Bodens des zu bearbeitenden landwirtschaftlichen Feldes historische Daten darstellen, die sensorbasierte Bewegungsdaten eines Frontgerätes, eines Vorsatzgerätes, eines Ährenhebers, eines Halmteilers, einer Pflückerhaube und/oder einer Frontachse dieser selbstfahrenden landwirtschaftlichen Erntemaschine und/oder einer anderen landwirtschaftlichen Arbeitsmaschine aufweisen.

Bei einer vorteilhaften Weiterbildung der erfindungsgemäßen Lösung ist vorgesehen, dass die Erfassung der Informationen derart vorgesehen und eingerichtet ist, dass die erfassten Informationen mit einer Erfassungsposition bezüglich des landwirtschaftlichen Feldes, insbesondere mit Positionsinformationen eines Geolokalisationssystems, verknüpft sind.

Bei einer vorteilhaften Weiterbildung der erfindungsgemäßen Lösung ist vorgesehen, dass die selbstfahrende landwirtschaftliche Erntemaschine eine autonome selbstfahrende landwirtschaftliche Erntemaschine ist. In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome selbstfahrende landwirtschaftliche Erntemaschine zum Einsatz, die sich dadurch auszeichnen, dass kein Bediener in einer Kabine zur Steuerung derselben vorhanden ist. Demnach steht bei autonomen selbstfahrende landwirtschaftliche Erntemaschine kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Erntemaschine auf einer landwirtschaftlichen Fläche ausführen kann. Derartige autonome selbstfahrende landwirtschaftliche Erntemaschinen werden daher auch als unbemannte selbstfahrende landwirtschaftliche Erntemaschinen bezeichnet.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht einer selbstfahrenden landwirtschaftlichen Erntemaschine,
- Fig. 2: eine Seitenansicht bezüglich des Vorsatzgerätes der selbstfahrenden landwirtschaftlichen Erntemaschine,
- Fig. 3: eine Draufsicht während einer Bearbeitung eines landwirtschaftlichen Feldes mit der selbstfahrenden landwirtschaftlichen Erntemaschine, und
- Fig. 4: eine weitere Draufsicht während einer Bearbeitung eines weiteren landwirtschaftlichen Feldes mit der selbstfahrenden landwirtschaftlichen Erntemaschine.

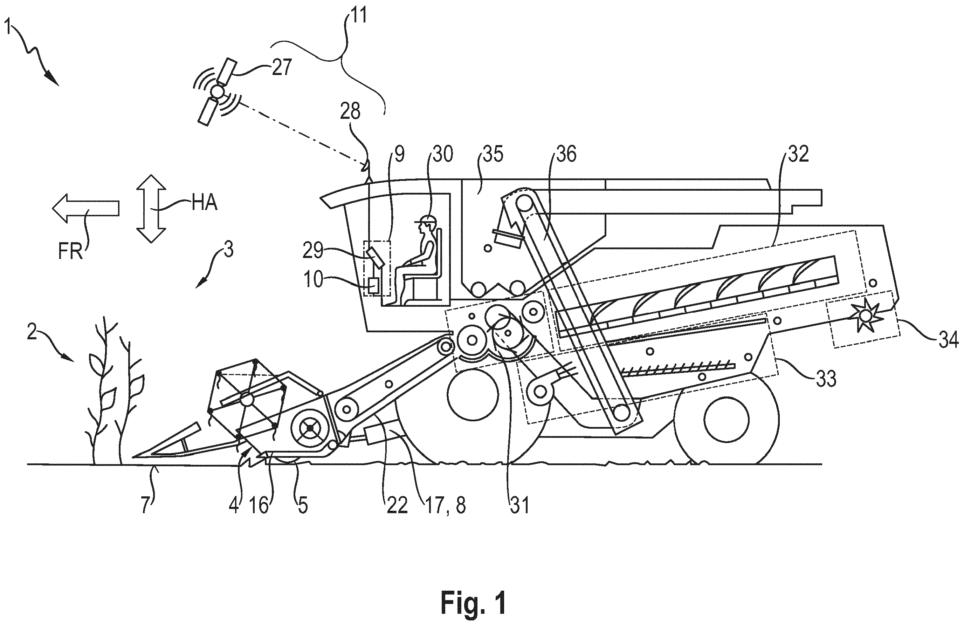

Die Fig. 1 zeigt eine als selbstfahrender Mähdrescher ausgebildete selbstfahrende landwirtschaftliche Erntemaschine 1 zum Aufnehmen, Bearbeiten und Weiterleiten von Erntegut 2 eines landwirtschaftlichen Feldes 3. Diese selbstfahrende landwirtschaftliche Erntemaschine 1 kann als autonome selbstfahrende landwirtschaftliche Erntemaschine ausgebildet sein.

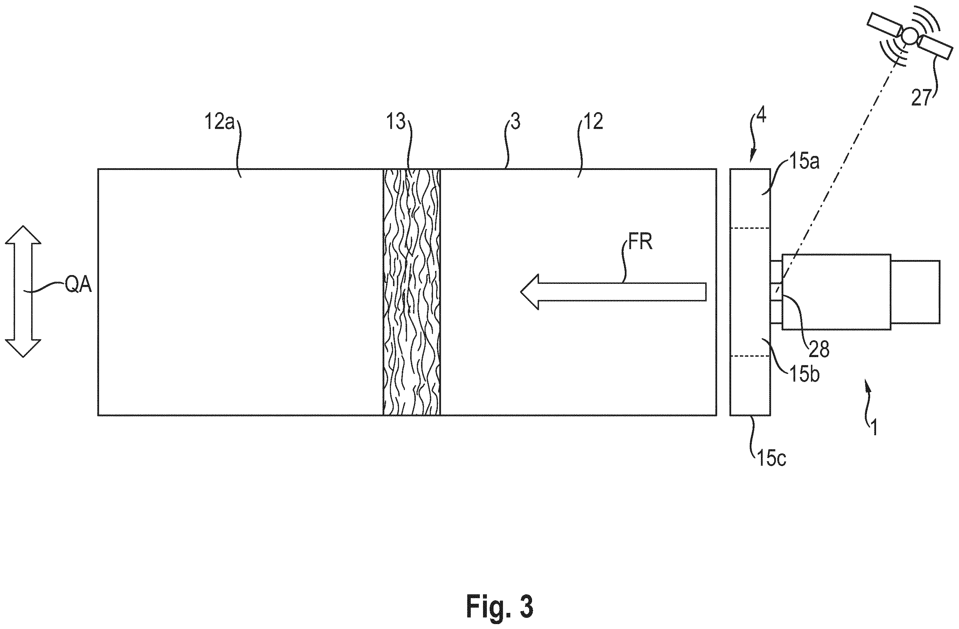

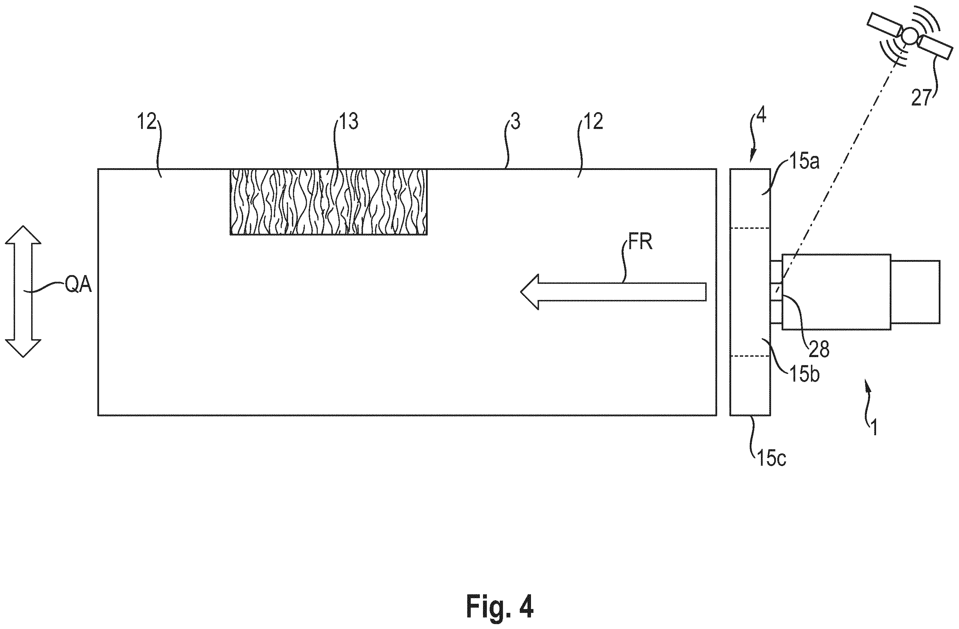

Die selbstfahrende landwirtschaftliche Erntemaschine 1 fährt gemäß den Fig. 1 bis 4 entlang einer Fahrtrichtung FR, wobei eine Höhenachse HA senkrecht und/oder orthogonal zur Fahrtrichtung FR ausgerichtet ist. Außerdem ist auch eine Querachse QR gemäß der Fig. 3 und Fig. 4 senkrecht und/oder orthogonal zur Fahrtrichtung FR ausgerichtet. Ferner ist die Querachse QR senkrecht und/oder orthogonal zur Höhenachse HA ausgerichtet, wobei die Höhenachse HA parallel zur nicht eingezeichneten Erdanziehungskraft ausgerichtet ist.

Die selbstfahrende landwirtschaftliche Erntemaschine 1 weist ein Vorsatzgerät 4 in Form eines Schneidwerkes zum Schneiden und Aufnehmen des Ernteguts 2 auf. Das Vorsatzgerät 4 ist vorzugsweise austauschbar gegen ein anderes Vorsatzgerät 4, so dass die Erntemaschine 1 auf das Ernten unterschiedlicher Fruchtarten angepasst werden kann. Unter dem Begriff Erntegut 2 ist dabei das gesamte vom Feldbestand durch das Vorsatzgerät 4 aufgenommene Material zu verstehen. Wie in Fig. 1 zu erkennen ist, wird ein Feldbestand durch das Vorsatzgerät 4 gemäht und das somit gewonnene Erntegut 2 einem Schrägförderer 22 zugeführt.

Die selbstfahrende landwirtschaftliche Erntemaschine 1 weist ferner eine Einstellvorrichtung 9 auf, die einen Datenspeicher 10 zum Hinterlegen von Daten - also einen Speicher im informationstechnischen Sinne - und eine Rechenvorrichtung 29 zur Verarbeitung der im Datenspeicher 10 hinterlegten Daten aufweist. Die Einstellvorrichtung 9 kann dazu eingerichtet sein, einen Fahrer 30 bzw. eine Bedienperson der selbstfahrende landwirtschaftliche Erntemaschine 1 bei der Bedienung zu unterstützen. Die Einstellvorrichtung 9 kann eine für den Fahrer 30 eine optisch sichtbare und/oder konfigurierbare Eingabe-AusgabeVorrichtung umfassen.

Dem Schrägförderer 22 ist ein Dreschwerk 31 zum Dreschen von aufgenommenem Erntegut nachgeschaltet. Dem Dreschwerk 31 ist eine Abscheideanordnung 62 prozesstechnisch nachgelagert. Der dem Dreschwerk 31 zugeführte Erntegutstrom wird also im Anschluss - ohne das bereits vom Dreschwerk abgeschiedene Korngut - der Abscheideanordnung 32 zugeführt. In der Abscheideanordnung 32 wird das Erntegut mit dem in ihm verbliebenen Kornanteil so bearbeitet, dass auch das verbliebene Korngut möglichst aus dem Stroh und sonstigen Nichtkornbestandteilen herausgetrennt wird. Das im Dreschwerk 31 und der Abscheideanordnung 32 gewonnene Korngut wird dann einer Reinigungsanordnung 33 zugeführt. In der Reinigungsanordnung 33, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut mittels dem Kornelevator 36 in einen Korntank 35. Das ausgedroschene Stroh - also das verbliebene Erntegut in der Abscheideanordnung 32 - wird von der selbstfahrenden landwirtschaftlichen Erntemaschine 1 im Heckbereich ausgebracht. Hierzu kann es auf dem Feldboden abgelegt werden, z. B. als Schwad entlang einer Fahrspur. Oder es wird durch eine Häckselvorrichtung 34 zerkleinert und anschließend durch eine der Häckselvorrichtung 34 nachgeordnete und nicht dargestellte Verteilvorrichtung über die Arbeitsbreite der selbstfahrenden landwirtschaftlichen Erntemaschine 1 verteilt ausgebracht.

Die selbstfahrende landwirtschaftliche Erntemaschine 1 ist mit einem Geolokalisationssystem 11 datentechnisch verbunden ist, welches dazu vorgesehen und eingerichtet ist, die Position der selbstfahrenden landwirtschaftlichen Erntemaschine 1 bezüglich des landwirtschaftlichen Feldes 3 zu ermitteln und der Einstellvorrichtung 9 zu übermitteln. Die selbstfahrende landwirtschaftliche Erntemaschine 1 weist hierfür ein Satellitennavigationssystem 28 auf, welches Signale von einem oder mehreren Satelliten 27 empfängt, um die geographische Position der selbstfahrenden landwirtschaftlichen Erntemaschine 1 zu bestimmen.

Im Datenspeicher 10 der Einstellvorrichtung 9 ist ein digitales Abbild des zu bearbeitenden landwirtschaftlichen Feldes 3 hinterlegt, wobei dieses digitale Abbild des zu bearbeitenden landwirtschaftlichen Feldes 3 Informationen bezüglich des Bodens des zu bearbeitenden landwirtschaftlichen Feldes 3 aufweist.

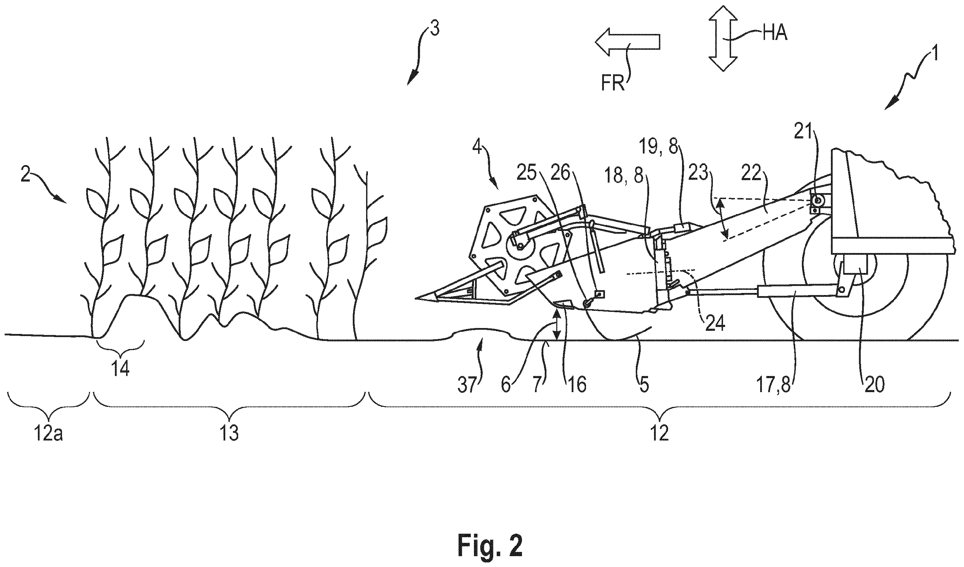

Wie in der Fig. 2 dargestellt, weist das Vorsatzgerät 4 wenigstens ein einen Sensor 5 zur Erfassung des Abstandes 6 des Vorsatzgeräts 4 zum Boden 7 des zu bearbeitenden landwirtschaftlichen Feldes 3 auf. Dieser Sensor 5 kann, wie in der Fig. 2 angedeutet, als Tastsensor und/oder als nicht dargestellter berührungsloser Abstandssensor ausgebildet sein. Außerdem hat das Vorsatzgeräts 4 mehreren Aktoren 8 zur Positionierung des Vorsatzgerät 4 bezüglich des Bodens 7 des zu bearbeitenden landwirtschaftlichen Feldes 3.

Das Vorsatzgerät 4 umfasst einen Messerbalken 16, welcher in dem mittels der Aktoren 8 einstellbaren Abstand 6 zum Boden 7 geführt wird. Der Abstand 6 wird durch die Aktoren 8 in Form von Hydraulikzylinder 17 eingestellt. Um die Einhaltung des Abstands 6 zum Boden zu überwachen, sind an der Unterseite des Vorsatzgerätes 2 mehrere Sensoren 5 angeordnet. Im dargestellten Ausführungsbeispiel sind die Sensoren 5 als mehrere Tastbügel ausgeführt, die jeweils um eine quer zur Fahrtrichtung FR verlaufende Welle 25 schwenkbar sind. Die Schwenkbewegung des jeweiligen Tastbügels des Sensors 5 wird mittels jeweils eines Potentiometers 26, das mit der jeweiligen Welle 25 gekoppelt ist, bestimmt.

Das Vorsatzgerät 4 kann Messerbalken 16 aufweisen, wobei sich der einstellbare Abstand 6 zum Boden 7 auf diese Messerbalken 16 beziehen kann.

Die selbstfahrenden landwirtschaftlichen Erntemaschine 1 umfasst zumindest einen Aktoren 8 in Form eines Hydraulikzylinders 17, der mit einem Ende an einer Konsole 20 der selbstfahrenden landwirtschaftlichen Erntemaschine 1 und mit seinem kolbenstangenseitigen Ende an dem Schrägförderer 22 angelenkt ist, um die quer zur Fahrtrichtung FR verlaufende Schwenkachse 21 schwenkbar. Bei der Schnitthöhenvorwahl als Betriebsmodus zur Bodenführung wird ein Neigungswinkel 23, um den des Schrägförderers 22 relativ zum Mähdrescher 1 um die horizontal verlaufende Schwenkachse 21 verschwenkt ist, auf einen vorgegebenen Sollwert für die Position des Vorsatzgerätes 2 relativ zum Boden 7, eingestellt.

Mittels zweier Hubzylinder 18, von denen in Fig. 2 nur einer sichtbar ist, wird eine Queranpassung des Vorsatzgerätes 2 auf das aktuelle Bodenniveau geregelt, wobei im vorliegenden Ausführungsbeispiel die Hubzylinder 18 das Vorsatzgerät 2 in an sich bekannter Weise um eine in Fahrtrichtung FR weisende virtuelle Pendelachse 24 verschwenken können.

Ein auf der Oberseite des Schrägförderers 22 angeordneter Hydraulikzylinder 19 ermöglicht es, einen Schnittwinkel einzustellen, welcher vom Vorsatzgerät 2 und vom Boden 10 eingeschlossen wird.

Die Einstellvorrichtung 9 ist dazu vorgesehen und eingerichtet, die Aktoren 17,8 und 18,8 in Abhängigkeit des mittels des Sensors 5 erfassten Abstandes 6 bezüglich des Bodens 7 derart einzustellen, dass das Vorsatzgerät 4 eine Höhenpositionierung mit einem Abstand 6 bezüglich des Bodens 7 des zu bearbeitenden landwirtschaftlichen Feldes 3 einnimmt. Hierfür weist der Datenspeicher 10 der Einstellvorrichtung 9 ein digitales Abbild des, insbesondere des gesamten, zu bearbeitenden landwirtschaftlichen Feldes 3 auf, wobei dieses digitale Abbild des, insbesondere des gesamten, zu bearbeitenden landwirtschaftlichen Feldes 3 Informationen bezüglich des Bodens 7 des zu bearbeitenden landwirtschaftlichen Feldes 3 aufweist. Die Einstellvorrichtung 9 ist dazu vorgesehen und eingerichtet, bei der Einstellung der Aktoren 17,8 und 18,8 für die Höhenpositionierung des Vorsatzgerätes 4 die Informationen bezüglich des Bodens 7 des zu bearbeitenden landwirtschaftlichen Feldes 3 einzubeziehen.

Das digitale Abbild des landwirtschaftlichen Feldes 3 umfasst eine digitale topographische Karte des zu bearbeitenden landwirtschaftlichen Feldes 3 ist, wobei die Karte Höheninformationen bezüglich der Erdoberfläche des zu bearbeitenden landwirtschaftlichen Feldes 3 aufweist. Diese Höheninformationen bezüglich des Bodens sind beispielhaft in der Fig. 2 seitlich und in den Fig. 3 und Fig. 4 in einer Draufsicht angedeutet dargestellt. In der Fig. 2 ist ein ebener Bereich 12, der einen Maulwurfshügel 37 aufweist, und ein unebener Bereich 13 mit einem sehr steilen Übergangsbereich 14 dargestellt.

Die Einstellvorrichtung 9 ist dazu vorgesehen und eingerichtet, das Vorsatzgerät 4 basierend auf den Informationen bezüglich der Erdoberfläche des zu bearbeitenden landwirtschaftlichen Feldes 3 und basierend auf der Position der die selbstfahrende landwirtschaftliche Erntemaschine 1 bezüglich des landwirtschaftlichen Feldes 3 vorausschauend einzustellen, sodass eine Kollision des Vorsatzgerätes 4 mit dem unebenen Erdoberflächenbereich 13, der insbesondere über den Erntegutbestand für einen Fahrer 14 nicht erkennbar ist, zu vermieden.

In der Fig. 2 ist die wird durch die Einstellvorrichtung 9 eine automatische Höhenpositionierung und/oder Querpositionierung basierend auf dem mittels des Sensor 5 erfassten Abstandes 6 des Vorsatzgeräts 4 zum Boden 7 im Bereich 13 trotz des Maulwurfshügel 37 zu verhindern, da die Informationen bezüglich des Bodens 7 des zu bearbeitenden landwirtschaftlichen Feldes 3 darlegen, dass der Bereich des Bodens 7, über dem das Vorsatzgerät 4 positioniert wird, einen ebenen Bereich 12 des Bodens 7 ausbildet.

Ferner ist die Einstellvorrichtung 9 dazu vorgesehen und eingerichtet, eine automatische Höhenpositionierung des Vorsatzgerätes 4 vorausschauend bezüglich eines Übergangs vom ebenen Bereich 12 des Bodens 7 zum unebenen Bereich 13 des Bodens 7 derart einzustellen, dass das Vorsatzgerät 4 über dem unebenen Bereich 13 einen größeren Abstand 6 zum unebenen Bereich 13 des Bodens 7 einnimmt als der Abstand des Vorsatzgerätes 4 zum ebenen Bereich 12 des Bodens 7 war.

Außerdem ist die Einstellvorrichtung 9 dazu vorgesehen und eingerichtet, eine automatische Höhenpositionierung des Vorsatzgerätes 4 vorausschauend bezüglich eines Übergangs vom unebenen Bereich 13 des Bodens 7 zu einem weiteren ebenen Bereich 12a des Bodens 7 derart einzustellen, dass das Vorsatzgerät 4 über dem weiteren ebenen Bereich 12a einen kleineren Abstand 6 zum ebenen Bereich 12a des Bodens 7 einnimmt als der Abstand des Vorsatzgerätes 4 zum unebenen Bereich 13 des Bodens 7 war.

Die Einstellvorrichtung 9 kann beispielsweise einen Übergangsbereiche 14 des Bodens 7 des zu bearbeitenden landwirtschaftlichen Feldes 3 aus den im Datenspeicher 10 hinterlegten Informationen zu ermitteln. Hierbei kann es vorgesehen sein, dass die Einstellvorrichtung die Empfindlichkeit und/oder Gewichtung von Messsignalen und/oder Messwerten der Sensoren zu erhöhe im Übergangsbereiche 14 erhöht, um eine schneller Anpassung des Abstandes 6 zu erzielen und beim Eintritt in den ebenen Bereich 12a des Bodens 7 wieder die Empfindlichkeit und/oder Gewichtung von Messsignalen und/oder Messwerten der Sensoren zu reduzieren.

Das Vorsatzgerät 4 weist zusätzlich oder alternativ bewegbare Messerbalken 16 auf, die mittels nicht dargestellter Aktoren in einem Bewegungsbereich gegenüber dem Boden 7 des zu bearbeitenden landwirtschaftlichen Feldes 3 bewegbar sind, wobei die Einstellvorrichtung 9 dazu vorgesehen und eingerichtet ist, den Bewegungsbereich dieser bewegbare Messerbalken 16 basierend auf den Informationen bezüglich des Bodens 7 des zu bearbeitenden landwirtschaftlichen Feldes 3 einzustellen.

In der Fig. 3 und Fig. 4 ist das Vorsatzgerät 4 mehrteilig durch Vorsatzgerätabschnitte 15a, 15b und 15c ausgebildet, wobei diese Vorsatzgerätabschnitte 15a, 15b und 15c dazu vorgesehen und eingerichtet sind, unterschiedliche Einstellungen, insbesondere unterschiedliche Höhenpositionierungen und/oder Querpositionierungen, bezüglich des Bodens 7 des zu bearbeitenden landwirtschaftlichen Feldes 3 anzunehmen, wobei die Einstellvorrichtung 9 dazu vorgesehen und eingerichtet ist, die Vorsatzgeräteabschnitte 15a, 15b und 15c des Vorsatzgeräts 4 unabhängig voneinander und/oder miteinander gewichtet basierend auf den Informationen bezüglich des Bodens 7 des zu bearbeitenden landwirtschaftlichen Feldes 3 einzustellen. Während in der Fig. 3 alle Vorsatzgerätabschnitte 15a, 15b und 15c aufgrund des unebenen Bereiches 13 vorschauend angesteuert und/oder geregelt werden, wird in der Fig. 4 lediglich der Vorsatzgerätabschnitte 15a aufgrund des unebenen Bereiches 13 vorschauend angesteuert und/oder geregelt, während die Vorsatzgerätabschnitte 15b und 15c aufgrund des ebenen Bereiches 12 vorschauend angesteuert und/oder geregelt werden.

Falls das Vorsatzgerät 4 nicht in der Lage ist, insbesondere aufgrund des maximalen Bewegungsbereiches des Vorsatzgerätes 4, über eine gesamte Vorsatzgerätquerbreite das Erntegut 2 abzuschneiden, kann die die Einstellvorrichtung 9 dazu vorgesehen und eingerichtet sein, eine Warnung an den Fahrer zu übermitteln und/oder eine Reduktion der Fahrgeschwindigkeit der selbstfahrende landwirtschaftliche Erntemaschine und/oder eine alternative Fahrroute vorgeben, um möglichst viel Erntegut 2 zu ernten, z.B. quer zum Wall fahren. In allen Fällen kann jedoch der Schutz des Vorsatzgerät 4 vor einer Bodenkollision eine höhere Priorität als das Schnittbild und/oder Ernteverluste aufweisen.

Die Informationen, insbesondere Höheninformationen, bezüglich des Bodens 7 des zu bearbeitenden landwirtschaftlichen Feldes 3 können historische Daten darstellen, die mittels dieser selbstfahrenden landwirtschaftlichen Erntemaschine 1 und/oder mittels einer anderen und nicht dargestellten landwirtschaftlichen Arbeitsmaschine auf dem zu bearbeitenden landwirtschaftlichen Feld 3 zeitlich vor der Bearbeitung des landwirtschaftlichen Feldes 3 sensorisch erfasst wurden. Hierbei können sensorbasierte Bewegungsdaten eines Frontgerätes, eines Vorsatzgerätes, eines Ährenhebers, eines Halmteilers, einer Pflückerhaube und/oder einer Frontachse dieser selbstfahrenden landwirtschaftlichen Erntemaschine 1 und/oder einer anderen landwirtschaftlichen Arbeitsmaschineverwendet verwendet werden.

### Bezugszeichenliste

- 1: Selbstfahrende landwirtschaftliche Erntemaschine
- 2: Erntegut
- 3: Landwirtschaftliches Feld
- 4: Vorsatzgerät
- 5: Sensor
- 6: Abstand
- 7: Boden
- 8: Aktoren
- 9: Einstellvorrichtung
- 10: Datenspeicher
- 11: Geolokalisationssystem
- 12: ebener Bereich
- 13: unebener Bereich
- 14: Übergangsbereich
- 15: Vorsatzgeräteteile
- 16: Messerbalken
- 17: Hydraulikzylinder
- 18: Hubzylinder
- 19: Hydraulikzylinder
- 20: Konsole
- 21: Schwenkachse
- 22: Schrägförderer
- 23: Neigungswinkel
- 24: Pendelachse
- 25: Welle
- 26: Potentiometer
- 27: Satellit
- 28: Satellitennavigationssystem
- 29: Rechenvorrichtung
- 30: Fahrer
- 31: Dreschwerk
- 32: Abscheidevorrichtung
- 33: Reinigungsvorrichtung
- 34: Häckselvorrichtung
- 35: Korntank
- 36: Kornelevator
- 37: Maulwurfshügel
- FR: Fahrtrichtung
- QA: Querachse
- HA: Höhenachse

## Patentansprüche

1. Selbstfahrende landwirtschaftliche Erntemaschine (1) zum Aufnehmen, Bearbeiten und Weiterleiten von Erntegut (2) eines landwirtschaftlichen Feldes (3),
- mit einem Vorsatzgerät (4) zum Schneiden und Aufnehmen des Ernteguts (2), welches einen Sensor (5) zur Erfassung des Abstandes (6) des Vorsatzgeräts (4) zum Boden (7) des zu bearbeitenden landwirtschaftlichen Feldes (3) aufweist,
- mit mehreren Aktoren (8) zur Positionierung des Vorsatzgerät (4) bezüglich des Bodens (7) des zu bearbeitenden landwirtschaftlichen Feldes (3),
- mit einer Einstellvorrichtung (9), die dazu vorgesehen und eingerichtet ist, die Aktoren (8) in Abhängigkeit des mittels des Sensors (5) erfassten Abstandes (6) bezüglich des Bodens (7) derart einzustellen, dass das Vorsatzgerät (4) eine Höhenpositionierung bezüglich des Bodens (7) des zu bearbeitenden landwirtschaftlichen Feldes (3) einnimmt,
- wobei die Einstellvorrichtung (9) einen Datenspeicher (10) aufweist,
**dadurch gekennzeichnet,**
- **dass** der Datenspeicher (10) der Einstellvorrichtung (9) ein digitales Abbild des zu bearbeitenden landwirtschaftlichen Feldes (3) aufweist,
- wobei das digitale Abbild des zu bearbeitenden landwirtschaftlichen Feldes (3) Informationen bezüglich des Bodens (7) des zu bearbeitenden landwirtschaftlichen Feldes (3) aufweist,
- wobei die Einstellvorrichtung (9) dazu vorgesehen und eingerichtet ist, bei der Einstellung der Aktoren (8) für die Höhenpositionierung des Vorsatzgerätes (4) die Informationen bezüglich des Bodens (7) des zu bearbeitenden landwirtschaftlichen Feldes (3) einzubeziehen.

2. Selbstfahrende landwirtschaftliche Erntemaschine (1) nach einem der vorhergehenden Ansprüche,
**dadurch gekennzeichnet,**
- **dass** die Einstellvorrichtung (9) dazu vorgesehen und eingerichtet ist, die Aktoren in Abhängigkeit des mittels des Sensors (5) erfassten Abstandes (6) bezüglich des Bodens (7) derart einzustellen, dass das Vorsatzgerät (4) zusätzlich zur Höhenpositionierung eine Querpositionierung bezüglich des Bodens (7) des zu bearbeitenden landwirtschaftlichen Feldes (3) einnimmt,
- wobei die Einstellvorrichtung (9) dazu vorgesehen und eingerichtet ist, bei der Einstellung der Aktoren (8) für die Höhenpositionierung und die Querpositionierung des Vorsatzgerätes (4) die Informationen bezüglich des Bodens (7) des zu bearbeitenden landwirtschaftlichen Feldes (3) einzubeziehen.

3. Selbstfahrende landwirtschaftliche Erntemaschine (1) nach einem der vorhergehenden Ansprüche,
**dadurch gekennzeichnet,**
- **dass** die selbstfahrende landwirtschaftliche Erntemaschine (1) mit einem Geolokalisationssystem (11) datentechnisch verbunden ist, welches dazu vorgesehen und eingerichtet ist, die Position der selbstfahrenden landwirtschaftlichen Erntemaschine (1) bezüglich des landwirtschaftlichen Feldes (3) zu ermitteln und der Einstellvorrichtung (9) zu übermitteln,
- wobei die Einstellvorrichtung (9) dazu vorgesehen und eingerichtet ist, das Vorsatzgerät (4) basierend auf den Informationen bezüglich des Bodens (7) des zu bearbeitenden landwirtschaftlichen Feldes (3) und basierend auf der Position der die selbstfahrende landwirtschaftliche Erntemaschine (1) bezüglich des landwirtschaftlichen Feldes (3) vorausschauend einzustellen, und/oder
- **dass** die Einstellvorrichtung (9) dazu vorgesehen und eingerichtet ist, das Vorsatzgerät (4) unabhängig von dem mittels des Sensors (5) erfassten Abstandes (6) bezüglich des Bodens (7) einzustellen.

4. Selbstfahrende landwirtschaftliche Erntemaschine (1) nach einem der vorhergehenden Ansprüche,
**dadurch gekennzeichnet,**
- **dass** das digitale Abbild des landwirtschaftlichen Feldes (3) eine digitale topographische Karte des zu bearbeitenden landwirtschaftlichen Feldes (3) ist, und/oder
- **dass** das digitale Abbild des landwirtschaftlichen Feldes (3) eine digitale topographische Karte des zu bearbeitenden landwirtschaftlichen Feldes (3) ist, wobei die Karte Höheninformationen bezüglich des Bodens (7) des zu bearbeitenden landwirtschaftlichen Feldes (3) aufweist.

5. Selbstfahrende landwirtschaftliche Erntemaschine (1) nach einem der vorhergehenden Ansprüche,
**dadurch gekennzeichnet,**
**dass** die Einstellvorrichtung (9) dazu vorgesehen und eingerichtet ist, ebene Bereiche (12) des Bodens (7) und/oder unebene Bereiche (13) des Bodens (7) und/oder Übergangsbereiche (14) des Bodens (7) des zu bearbeitenden landwirtschaftlichen Feldes (3) aus den im Datenspeicher (10) hinterlegten Informationen zu ermitteln.

6. Selbstfahrende landwirtschaftliche Erntemaschine (1) nach einem der vorhergehenden Ansprüche,
**dadurch gekennzeichnet,**
- **dass** die Einstellvorrichtung (9) dazu vorgesehen und eingerichtet ist, die Höhenpositionierung und/oder die Querpositionierung des Vorsatzgerätes (4) bezüglich des Bodens (7) zwischen einem ebenen Bereich (12) des Bodens (7) und einem unebenen Bereich (13) des Bodens (7) vorausschauend einzustellen, und/oder
- **dass** die Einstellvorrichtung (9) dazu vorgesehen und eingerichtet ist, die Höhenpositionierung und/oder die Querpositionierung des Vorsatzgerätes (4) bezüglich des Bodens (7) zwischen mehreren zueinander höhenversetzen ebenen Bereichen (12) des Bodens (7) vorausschauend einzustellen.

7. Selbstfahrende landwirtschaftliche Erntemaschine (1) nach einem der vorhergehenden Ansprüche,
**dadurch gekennzeichnet,**
- **dass** die Einstellvorrichtung (9) dazu vorgesehen und eingerichtet ist, eine automatische Höhenpositionierung des Vorsatzgerätes (4) vorausschauend bezüglich eines Übergangs von einem ebenen Bereich (12) des Bodens (7) zu einem unebenen Bereich (13) des Bodens (7) derart einzustellen, dass das Vorsatzgerät (4) über dem unebenen Bereich (13) einen größeren Abstand zum unebenen Bereich (13) des Bodens (7) einnimmt als der Abstand des Vorsatzgerätes (4) zum ebenen Bereich (12) des Bodens (7) war, und/oder
- **dass** die Einstellvorrichtung (9) dazu vorgesehen und eingerichtet ist, eine automatische Höhenpositionierung des Vorsatzgerätes (4) vorausschauend bezüglich eines Übergangs von einem unebenen Bereich (13) des Bodens (7) zu einem ebenen Bereich (12) des Bodens (7) derart einzustellen, dass das Vorsatzgerät (4) über dem ebenen Bereich (12) einen kleineren Abstand zum ebenen Bereich (12) des Bodens (7) einnimmt als der Abstand des Vorsatzgerätes (4) zum unebenen Bereich (13) des Bodens (7) war.

8. Selbstfahrende landwirtschaftliche Erntemaschine (1) nach einem der vorhergehenden Ansprüche,
**dadurch gekennzeichnet,**
**dass** die Einstellvorrichtung (9) dazu vorgesehen und eingerichtet ist, eine automatische Höhenpositionierung und/oder Querpositionierung basierend auf dem mittels des Sensor (5) erfassten Abstandes (6) des Vorsatzgeräts (4) zum Boden (7) wenigstens teilweise zu verhindern, wenn die Informationen bezüglich des Bodens (7) des zu bearbeitenden landwirtschaftlichen Feldes (3) darlegen, dass der Bereich des Bodens (7), über dem das Vorsatzgerät (4) positioniert ist, einen ebenen Bereich (12) des Bodens (7) ausbildet.

9. Selbstfahrende landwirtschaftliche Erntemaschine (1) nach einem der vorhergehenden Ansprüche,
**dadurch gekennzeichnet,**
- **dass** die Einstellvorrichtung (9) dazu vorgesehen und eingerichtet ist, eine Empfindlichkeit der Höhenpositionierung und/oder der Querpositionierung des Vorsatzgeräts (4) in Abhängigkeit der Informationen bezüglich des Bodens (7), insbesondere bezüglich der Oberflächenstruktur des Bodens (7), des zu bearbeitenden landwirtschaftlichen Feldes (3) einzustellen, und/oder
- **dass** die Einstellvorrichtung (9) dazu vorgesehen und eingerichtet ist, eine Gewichtung, insbesondere der Empfindlichkeit, zwischen der Höhenpositionierung und der Querpositionierung des Vorsatzgeräts (4) in Abhängigkeit der Informationen bezüglich des Bodens (7), insbesondere bezüglich der Oberflächenstruktur des Bodens (7), des zu bearbeitenden landwirtschaftlichen Feldes (3) einzustellen.

10. Selbstfahrende landwirtschaftliche Erntemaschine (1) nach einem der vorhergehenden Ansprüche,
**dadurch gekennzeichnet,**
- **dass** das Vorsatzgerät (4) mehrteilig durch Vorsatzgeräteteile (15) ausgebildet ist, wobei diese Vorsatzgeräteteile (15) dazu vorgesehen und eingerichtet sind, unterschiedliche Einstellungen, insbesondere unterschiedliche Höhenpositionierungen und/oder Querpositionierungen, bezüglich des Bodens (7), insbesondere bezüglich der Oberflächenstruktur des Bodens (7), des zu bearbeitenden landwirtschaftlichen Feldes (3) anzunehmen,
- wobei die Einstellvorrichtung (9) dazu vorgesehen und eingerichtet ist, die Vorsatzgeräteteile (15) des Vorsatzgerätes (4) unabhängig voneinander und/oder miteinander gewichtet basierend auf den Informationen bezüglich des Bodens (7), insbesondere bezüglich der Oberflächenstruktur des Bodens (7), des zu bearbeitenden landwirtschaftlichen Feldes (3) einzustellen.

11. Selbstfahrende landwirtschaftliche Erntemaschine (1) nach einem der vorhergehenden Ansprüche,
**dadurch gekennzeichnet,**
- **dass** das Vorsatzgerät (4) bewegbare Messerbalken (16) aufweist, die in einem Bewegungsbereich gegenüber dem Boden (7) des zu bearbeitenden landwirtschaftlichen Feldes (3) bewegbar sind,
- wobei die Einstellvorrichtung (9) dazu vorgesehen und eingerichtet ist, den Bewegungsbereich der bewegbare Messerbalken (16) basierend auf den Informationen bezüglich des Bodens (7) des zu bearbeitenden landwirtschaftlichen Feldes (3) einzustellen, und/oder
- **dass** die Einstellvorrichtung (9) dazu vorgesehen und eingerichtet ist, falls das Vorsatzgerät (4) nicht in der Lage ist, insbesondere aufgrund des maximalen Bewegungsbereiches des Vorsatzgerätes (4), über eine gesamte Vorsatzgerätquerbreite das Erntegut (2) abzuschneiden, eine Warnung an einen Fahrer (30) zu übermitteln und/oder eine Reduktion der Fahrgeschwindigkeit der selbstfahrenden landwirtschaftlichen Erntemaschine (1) einzustellen und/oder eine alternative Fahrroute vorzugeben, um möglichst viel Erntegut (2) zu ernten, und/oder einem Schutz des Vorsatzgerät (4) vor einer Bodenkollision eine höhere Priorität als dem Schnittbild und/oder dem Ernteverlust zuzuordnen.

12. Selbstfahrende landwirtschaftliche Erntemaschine (1) nach einem der vorhergehenden Ansprüche,
**dadurch gekennzeichnet,**
- **dass** die Informationen, insbesondere Höheninformationen, bezüglich des Bodens (7) des zu bearbeitenden landwirtschaftlichen Feldes (3) mittels einem Satelliten und/oder einer fliegenden Drohenvorrichtung und/oder einem Flugzeug erfasst wurden, und/oder
- **dass** die Informationen, insbesondere Höheninformationen, bezüglich des Bodens (7) des zu bearbeitenden landwirtschaftlichen Feldes (3) historische Daten darstellen, die mittels dieser selbstfahrenden landwirtschaftlichen Erntemaschine (1) und/oder mittels einer anderen landwirtschaftlichen Arbeitsmaschine auf dem zu bearbeitenden landwirtschaftlichen Feld (3) sensorisch erfasst wurden.

13. Selbstfahrende landwirtschaftliche Erntemaschine (1) nach Anspruch 12,
**dadurch gekennzeichnet,**
**dass** die Informationen, insbesondere Höheninformationen, bezüglich des Bodens (7) des zu bearbeitenden landwirtschaftlichen Feldes (3) historische Daten darstellen, die sensorbasierte Bewegungsdaten eines Frontgerätes, eines Vorsatzgerätes, eines Ährenhebers, eines Halmteilers, einer Pflückerhaube und/oder einer Frontachse dieser selbstfahrenden landwirtschaftlichen Erntemaschine (1) und/oder einer anderen landwirtschaftlichen Arbeitsmaschine aufweisen.

14. Selbstfahrende landwirtschaftliche Erntemaschine (1) nach Anspruch 12 oder 13,
**dadurch gekennzeichnet,**
**dass** die Erfassung der Informationen derart vorgesehen und eingerichtet ist, dass die erfassten Informationen mit einer Erfassungsposition bezüglich des landwirtschaftlichen Feldes (3), insbesondere mit Positionsinformationen eines Geolokalisationssystems (8), verknüpft werden.

15. Selbstfahrende landwirtschaftliche Erntemaschine (1) nach einem der vorhergehenden Ansprüche,
**dadurch gekennzeichnet,**
**dass** die selbstfahrende landwirtschaftliche Erntemaschine (1) eine autonome selbstfahrende landwirtschaftliche Erntemaschine (1) ist.
